# EUROPEAN PATENT SPECIFICATION

(11) **EP 3 951 243 B1**
(45) Date of publication and mention of the grant of the patent: **08.07.2026**
(21) Application number: 19922738.0
(22) Date of filing: 05.04.2019
(51) Int. Cl.: F17C 13/00, B63B 25/16, F17C 3/02

(54) **DOUBLE-SHELL TANK AND LIQUEFIED GAS CARRIER SHIP**
DOPPELWANDIGER TANK UND FLÜSSIGGASTRÄGERSCHIFF
RÉSERVOIR À DOUBLE COQUE ET NAVIRE TRANSPORTEUR DE GAZ LIQUÉFIÉ

(43) Date of publication of application: 09.02.2022
(73) Proprietor: KAWASAKI JUKOGYO KABUSHIKI KAISHA, Hyogo 650-8670 (JP)
(72) Inventor: KAWAMOTO, Hideki, Hyogo 650-8670 (JP); IMAI, Tatsuya, Hyogo 650-8670 (JP); MASHIRO, Keisuke, Hyogo 650-8670 (JP); OKUMURA, Kentaro, Hyogo 650-8670 (JP); FUJIMURA, Ryohei, Hyogo 650-8670 (JP); TANAKA, Kazuo, Hyogo 650-8670 (JP); KOUZAKI, Daisuke, Hyogo 650-8670 (JP); NAKADO, Hiroki, Hyogo 650-8670 (JP); MURAGISHI, Osamu, Hyogo 650-8670 (JP); SAKANO, Yoshinobu, Hyogo 650-8670 (JP)
(74) Representative: Dehns
(86) International application number: PCT/JP2019/015227
(87) International publication number: WO 2020/202578

(56) References cited:
- EP-A1- 2 990 324
- EP-A2- 2 444 711
- JP-A- 2016 124 385
- JP-A- 2017 194 166
- JP-A- H1 182 889
- JP-A- H1 182 889
- JP-A- H11 278 584
- JP-A- S58 156 800
- JP-A- S58 156 800
- US-A1- 2009 308 083

## Description

The present invention relates to a double-shell tank and a liquefied gas carrier ship including the double-shell tank.

Double-shell tanks for liquefied gases such as LNG and liquefied hydrogen have been conventionally known. For example, Patent Literature 1 discloses a spherical double-shell tank including an inner shell storing a liquefied gas and an outer shell enclosing the inner shell. In the double-shell tank, the space between the inner and outer shells is a vacuum, and a heat insulator is packed in the space between the inner and outer shells.

### Citation List

### Patent Literature

PTL 1: Japanese Laid-Open Patent Application Publication No. H2-195099
EP 2 444 711 A2 discloses an LNG storage container including: an inner shell; and an outer shell such that a space is formed between the inner shell and the outer shell.
JP H11 82889 A discloses a cylindrical inner tank and an outer tank provided to as to surround the inner tank. A cold insulating layer is formed between the inner and outer tanks.
JP S58 156800 A discloses a double-shell low-temperature tank.

However, in the double-shell tank disclosed in Patent Literature 1, the outer shell is subjected to a large force arising from the pressure difference between the vacuum inside the outer shell and the atmosphere outside the outer shell, and is thus required to have a significantly high strength.

It is therefore an object of the present invention to provide a double-shell tank that allows for a reduction in the strength required of the outer shell and a liquefied gas carrier ship including the double-shell tank.

Accord to an aspect of the invention there is provided a double-shell tank comprising: a spherical inner shell storing a liquefied gas; an outer shell enclosing the inner shell; a pipe tower extending from a top portion of the outer shell to a bottom portion of the inner shell; and a communication pipe joined to the inner shell around the pipe tower and defining a communication hole allowing a space between the inner and outer shells to communicate with an interior of the inner shell, the space between the inner and outer shells being filled with a boil-off gas generated by evaporation of the liquefied gas; the communication pipe being configured to prevent leakage of the liquefied gas into the space between the inner and outer shells in the event that sloshing of the liquefied gas occurs.

The present invention further provides a liquefied gas carrier ship including the double-shell tank as described herein with reference to the first aspect of the invention.

In the above configuration, the pressure in the space between the inner and outer shells can be made similar to the atmospheric pressure. Thus, the strength required of the outer shell can be reduced.

In the case where the double-shell tank with any one of the following configurations 1 to 6 is mounted on a hull, leakage of the liquefied gas into the space between the inner and outer shells can be prevented in the event that sloshing of the liquefied gas occurs due to rocking of the hull.

Configuration 1: The communication pipe is a straight pipe, and at least one projection that prevents the liquefied gas from leaking from the inner shell into the space between the inner and outer shells is disposed in the communication pipe.

Configuration 2: The communication pipe is a straight pipe, and an umbrella structure that prevents the liquefied gas from flowing from the inner shell into the communication hole is disposed in the inner shell.

Configuration 3: The communication pipe is a straight pipe, the communication pipe includes through holes arranged in a matrix or zigzag pattern, and one end of the communication pipe is closed by a closure plate, the one end being located in the inner shell.

Configuration 4: The communication pipe is an S-shaped pipe bent in an S-shape such that one end of the pipe opens upward and the other end of the pipe opens downward, the one end being located in the inner shell, the other end being located between the inner and outer shells.

Configuration 5: The communication pipe is a V-shaped pipe bent in a V-shape such that one end of the pipe opens obliquely downward and the other end of the pipe opens obliquely upward, the one end being located in the inner shell, the other end being located between the inner and outer shells.

Configuration 6: The communication pipe is a straight pipe, and a membrane permeable to the boil-off gas and impermeable to the liquefied gas is attached to one end of the communication pipe, the one end being located in the inner shell.

The double-shell tank may further include a heat insulator packed in the space between the inner and outer shells and covering an outer surface of the inner shell and an inner surface of the outer shell.

The double-shell tank may further include a heat insulator covering an outer surface of the outer shell. In this configuration, the distance from the inner shell to the outer shell and hence the diameter of the outer shell can be smaller than in a configuration where the outer surface of the outer shell is not covered by the heat insulator.

The present invention allows for a reduction in the strength required of an outer shell.
FIG 1 is a cross-sectional view of a liquefied gas carrier ship including a double-shell tank.
FIG 2 is a cross-sectional view of a liquefied gas carrier ship including a double-shell tank.
FIG 3 is a cross-sectional view of a liquefied gas carrier ship including a double-shell tank according to a first embodiment of the present invention.
FIG 4 is an enlarged view of a key part shown in FIG 3.
FIG 5 is an enlarged view of a key part of a double-shell tank according to a first modification of the first embodiment.
FIG 6 is an enlarged view of a key part of a double-shell tank according to a second modification of the first embodiment.
FIG 7 is an enlarged view of a key part of a double-shell tank according to a third modification of the first embodiment.
FIG 8 is an enlarged view of a key part of a double-shell tank according to a fourth modification of the first embodiment.
FIG 9 is an enlarged view of a key part of a double-shell tank according to a fifth modification of the first embodiment.
FIG 10 is a cross-sectional view of a liquefied gas carrier ship including a double-shell tank according to a sixth modification of the first embodiment.
FIG 11 is a cross-sectional view of a liquefied gas carrier ship including a double-shell tank.
FIG 12 is an enlarged view of a key part shown in FIG 11.

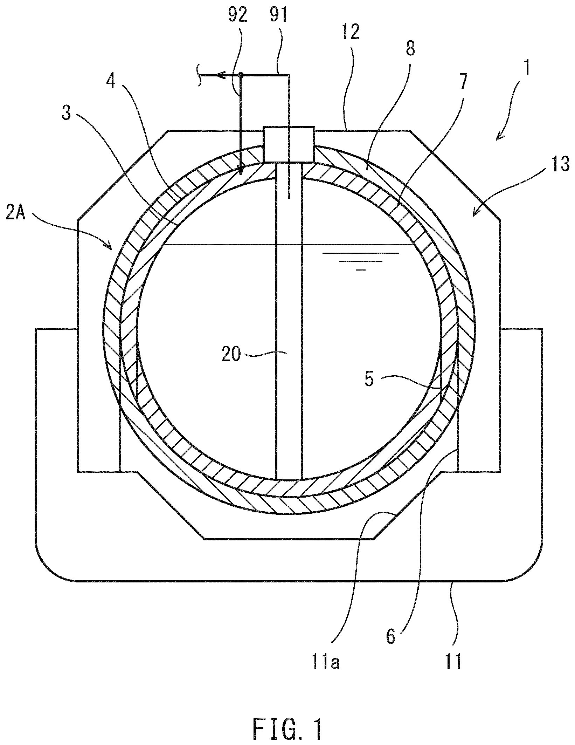

FIG 1 shows a liquefied gas carrier ship 1 including a double-shell tank 2A. The liquefied gas carrier ship 1 includes, in addition to the double-shell tank 2A, a hull 11 on which the double-shell tank 2A is mounted and a tank cover 12 forming a holding space 13 around the double-shell tank 2A together with the hull 11.

The holding space 13 is filled with nitrogen gas. The holding space 13 may be filled with dry air or exhaust gas of an engine for propulsion.

The double-shell tank 2A includes an inner shell 3 storing a liquefied gas and an outer shell 4 enclosing the inner shell 3. For example, the liquefied gas is LNG, liquefied nitrogen, liquefied hydrogen, or liquefied helium. The double-shell tank 2A further includes a pipe tower (also referred to as "pump tower") 20 extending from the top portion of the outer shell 4 to the bottom of the inner shell 3.

The inner shell 3 is spherical. The inner shell 3 need not be spherically symmetric and may have a shape close to a spherically symmetric shape. For example, the inner shell 3 may have a shape differing from a spherically symmetric shape in that the inner shell 3 bulges upward and/or downward in the direction of 45 degrees with respect to the center of the inner shell 3. Alternatively, the inner shell 3 may have a shape with a short tubular element interposed between the upper and lower hemispheres.

The outer shell 4 is also spherical. The center of the outer shell 4 coincides with the center of the inner shell 3. Like the inner shell 3, the outer shell 4 need not be spherically symmetric and may have a shape close to a spherically symmetric shape. For example, like the inner shell 3, the outer shell 4 may have a shape differing from a spherically symmetric shape in that the outer shell 4 bulges upward and/or downward in the direction of 45 degrees with respect to the center of the outer shell 4. The outer shell 4 need not be spherical and may have any other shape.

The pipe tower 20 includes a sealed box portion joined to the top portion of the outer shell 4 and a post portion extending downward from the box portion and penetrating through the top portion of the inner shell 3. For example, the post portion is in the shape of a hollow circular cylinder, and the part of the post portion that is located in the inner shell 3 includes through holes formed at suitable locations to allow communication between the inside and outside of the post portion. The post portion may be in the shape of a quadrangular prism.

Although not shown, a pump for pumping up the liquefied gas is disposed in a lower region inside the post portion of the pipe tower 20. A liquid delivery pipe and an electricity pipe are connected to the pump, and the liquid delivery pipe and electricity pipe pass through the inside of the post portion of the pipe tower 20 and penetrate through the box portion of the pipe tower 20 to the outside of the pipe tower 20.

Further, the box portion of the pipe tower 20 is penetrated also by a gas delivery pipe 91. The gas delivery pipe 91 serves to deliver a boil-off gas generated by evaporation of the liquefied gas stored in the inner shell 3 from the inner shell 3 to another device. The other device is, for example, the engine for propulsion, an engine for electricity generation, a reliquefaction device, or an atmospheric relief device.

A first heat insulator 7 is packed in the space between the inner and outer shells 3 and 4. The first heat insulator 7 entirely covers the outer surface of the inner shell 3 and the inner surface of the outer shell 4. Further, the outer surface of the outer shell 4 is entirely covered by a second heat insulator 8.

For example, the first heat insulator 7 may be a foamed material made of a resin such as polyurethane (PU) or phenolic resin (PF), may be a granular material such as perlite or hollow glass spheres, or may be an inorganic fibrous material such as glass wool.

The second heat insulator 8 is, for example, a foamed material made of a resin such as polyurethane or phenolic resin. As described above, the holding space 13 is filled with nitrogen gas. Thus, in the case where the second heat insulator 8 is a foamed material, the nitrogen gas enters the second heat insulator 8 from the holding space 13, and the internal pores of the second heat insulator 8 are filled with the nitrogen gas. Nitrogen gas may be fed to the second heat insulator 8 from a gas generator (not shown). In the case where the holding space 13 is filled with dry air, the internal pores of the second heat insulator 8 may also be filled with dry air.

The space between the inner and outer shells 3 and 4 is filled with the boil-off gas. Various methods can be used to fill the space between the inner and outer shells 3 and 4 with the boil-off gas.

A branch pipe 92 branches from the gas delivery pipe 91 described above. The distal end of the branch pipe 92 opens into the space between the inner and outer shells 3 and 4. The gas delivery pipe 91 may be provided with various devices such as a compressor located upstream of the point of branching of the branch pipe 92. The branch pipe 92 may be provided with devices such as a pressure regulation valve and a check valve.

The outer shell 4 is supported by a skirt 6 on a floor surface 11a of the hull 11, and the inner shell 3 is supported by a skirt 5 on the inner circumferential surface of the outer shell 4. The skirts 5 and 6 are tubular skirts having axes extending in the vertical direction. The upper end of the skirt 6 is jointed to an equatorial portion of the outer shell 4, and the upper end of the skirt 5 is joined to an equatorial portion of the inner shell 3.

The structure for supporting the outer shell 4 and inner shell 3 may be changed as appropriate. For example, the inner shell 3 may be suspended from the outer shell 4.

In the double-shell tank 2A as described above, the pressure in the space between the inner and outer shells 3 and 4 can be made similar to the atmospheric pressure. Thus, the strength required of the outer shell 4 can be reduced.

### <Modification>

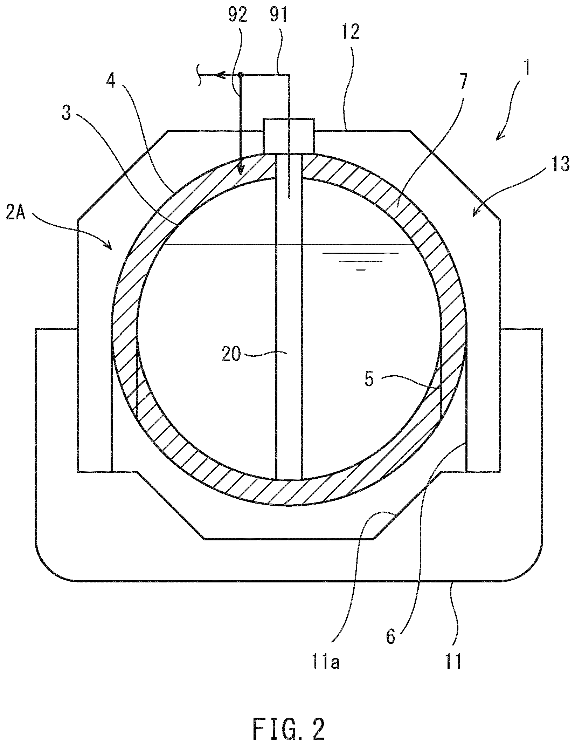

The outer surface of the outer shell 4 need not be covered by the second heat insulator 8, and may be bare as shown in FIG 2. However, in this case, the heat insulation performance needs to be ensured by increasing the distance from the inner shell 3 to the outer shell 4. In contrast, when the outer surface of the outer shell 4 is covered by the second heat insulator 8, the distance from the inner shell 3 to the outer shell 4 and hence the diameter of the outer shell 4 can be smaller than when the outer surface of the outer shell 4 is not covered by the second heat insulator 8. The present modification is applicable also to the first embodiment of the invention described below.

### (First embodiment)

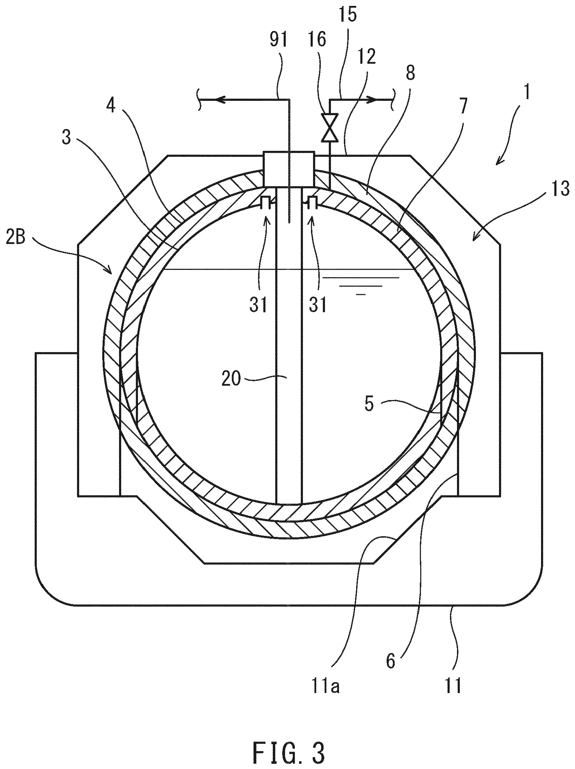

FIG 3 shows the liquefied gas carrier ship 1 including a double-shell tank 2B according to the first embodiment of the present invention. In the present embodiment, elements which are the same as those described in the example above are denoted by the same reference signs, and the descriptions given above for these elements are omitted.

In the present embodiment, the branch pipe 92 is not used to fill the space between the inner and outer shells 3 and 4 with the boil-off gas, but instead an upper portion of the inner shell 3 includes communication holes 31 allowing the space between the inner and outer shells 3 and 4 to communicate with the interior of the inner shell 3. There may be only one communication hole 31. In the present embodiment, the first heat insulator 7 is a foamed material.

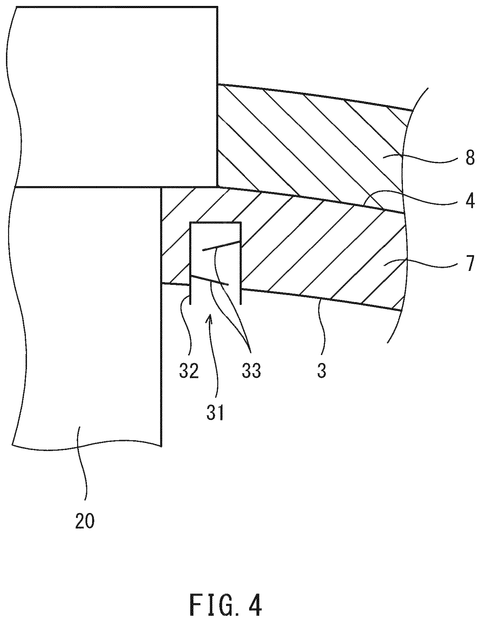

Specifically, as shown in FIG 4, each communication hole 31 in the present embodiment is defined by a communication pipe 32 joined to the inner shell 3 around the pipe tower 20. The communication pipe 32 is a straight pipe, and at least one projection 33 (two projections 33 in the example shown) that prevents the liquefied gas from leaking from the inner shell 3 into the space between the inner and outer shells 3 and 4 is disposed in the communication pipe 32.

In such a configuration, leakage of the liquefied gas into the space between the inner and outer shells 3 and 4 can be prevented in the event that sloshing of the liquefied gas occurs due to rocking of the hull 11.

In the present embodiment, it is desirable that a discharge pipe 15 provided with an on-off valve 16 be connected to the outer shell 4 to allow the boil-off gas to be discharged out of the space between the inner and outer shells 3 and 4 in the event that the pressure in the space excessively increases.

### <Modifications>

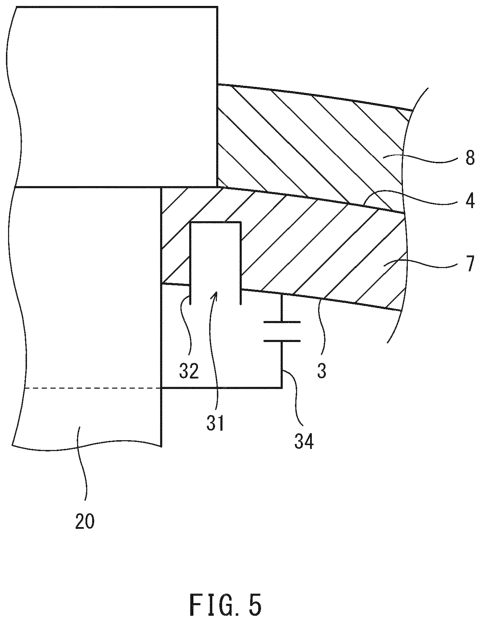

The effect similar to that of the above embodiment can be achieved by configurations shown in FIGS. 5 to 10.

In the configuration shown in FIG 5, an umbrella structure 34 that prevents the liquefied gas flowing from the inner shell 3 into the communication hole 31 is disposed in the inner shell 3.

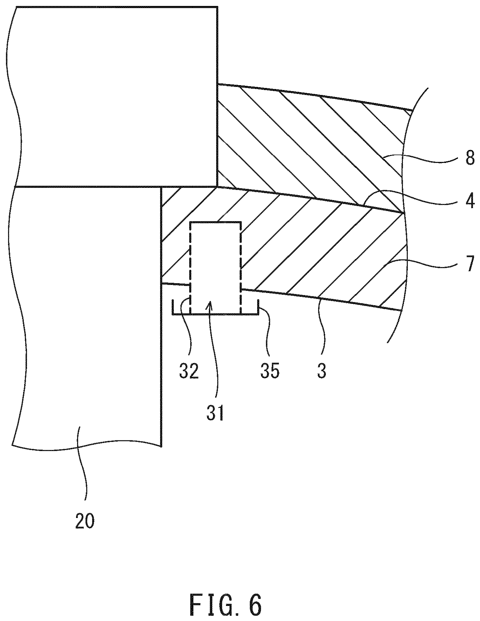

In the configuration shown in FIG 6, the communication pipe 32 includes through holes arranged in a matrix or zigzag pattern, and one end (lower end) of the communication pipe 32 that is located in the inner shell 3 is closed by a closure plate 35.

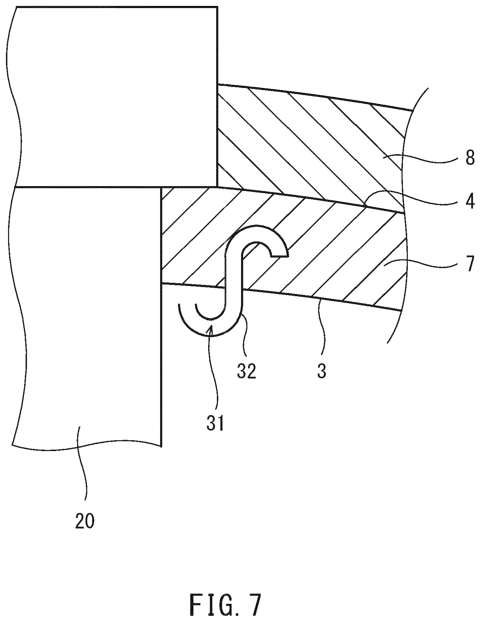

In the configuration shown in FIG 7, the communication pipe 32 is an S-shaped pipe bent in an S shape. One end of the communication pipe 32 that is located in the inner shell 3 opens upward, and the other end located between the inner and outer shells 3 and 4 opens downward.

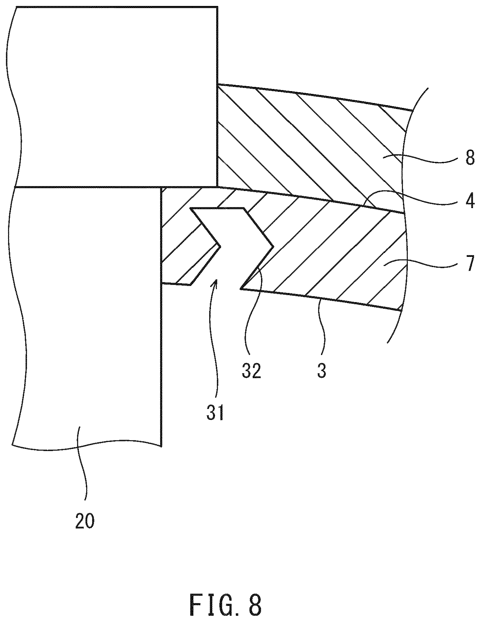

In the configuration shown in FIG 8, the communication pipe 32 is a V-shaped pipe bent in a V-shape. One end of the communication pipe 32 that is located in the inner shell 3 opens obliquely downward, and the other end located between the inner and outer shells 3 and 4 opens obliquely upward.

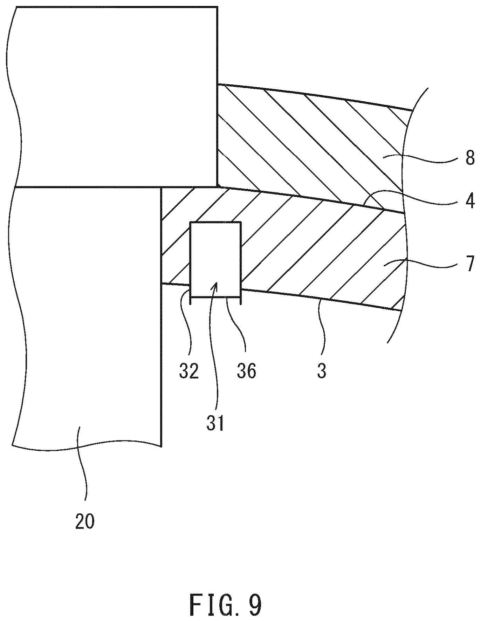

In the configuration shown in FIG 9, a membrane 36 permeable to the boil-off gas and impermeable to the liquefied gas is attached to the lower end of the communication pipe 32 which is a straight pipe. For example, the membrane 36 is a porous ceramic membrane or a palladium membrane.

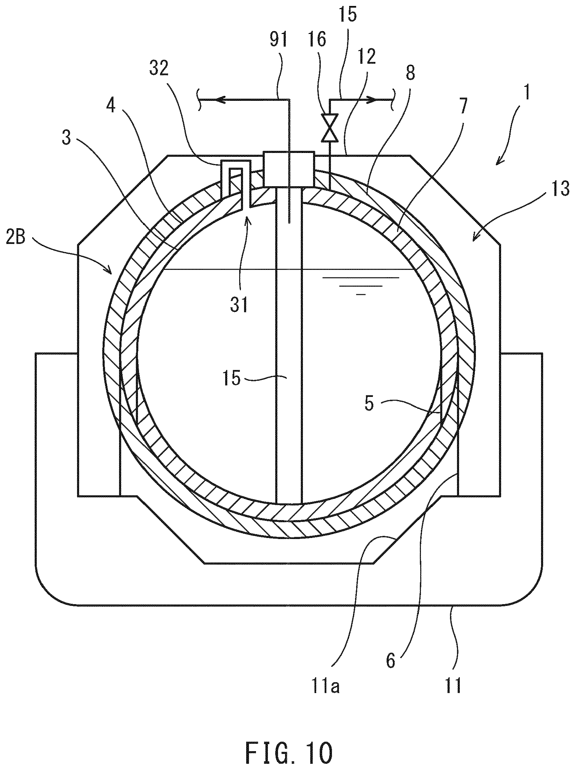

The configuration shown in FIG 10 is suitable for the case where the first heat insulator 7 is a granular material. In the configuration shown in FIG 10, the communication pipe 32 penetrates through the outer shell 4, and is bent at 180 degrees outside the outer shell 4 and connected to the outer shell 4.

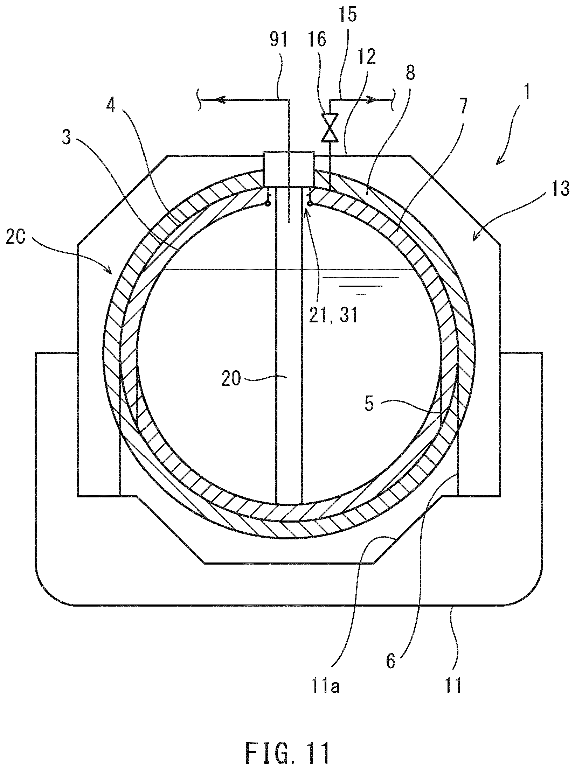

FIG 11 shows the liquefied gas carrier ship 1 including a double-shell tank 2C. Elements which are the same as those of the first embodiment are denoted by the same reference signs, and the descriptions given above for these elements are omitted.

The top portion of the inner shell 3 includes an opening 21 for providing a gap between the top portion of the inner shell 3 and the pipe tower 20, and the communication hole 31 is defined by the gap.

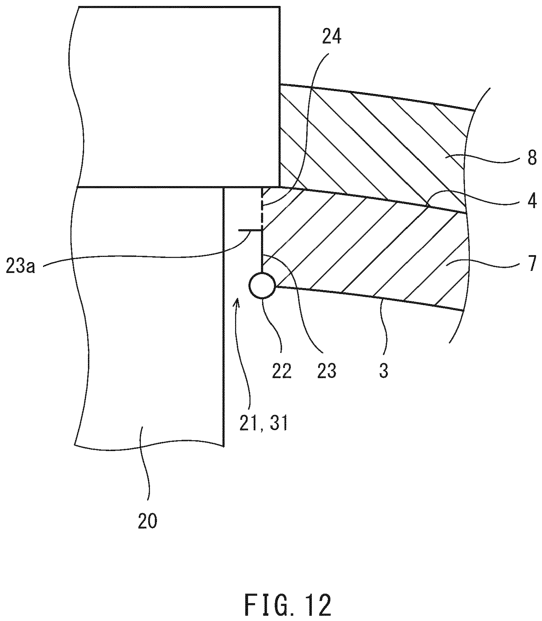

Specifically, as shown in FIG 12, a reinforcing ring 22 is joined to the inner shell 3 along the periphery of the opening 21. The inner diameter of the reinforcing ring 22 is larger than the diameter of the post portion of the pipe tower 20.

A tubular partition plate 23 rises from the reinforcing ring 22, and an annular baffle plate 23a projecting radially inward is disposed at the upper end of the partition plate 23. Additionally, a tubular gas-permeable member (a metal mesh or porous plate) is located between the upper end of the partition plate 23 and the box portion of the pipe tower 20 (or optionally the outer shell 4).

This configuration also allows the space between the inner and outer shells 3 and 4 to be filled with the boil-off gas.

### (Other embodiments)

The present invention is not limited to the embodiment described above, and various modifications can be made without departing from the gist of the present invention.

For example, the double-shell tanks 2A to 2C need not be included in the liquefied gas carrier ship 1, and may be included in onshore facilities. Additionally, the space between the inner and outer shells 3 and 4 need not be packed with the first heat insulator 7, and may be free of any substances other than the boil-off gas.

### Reference Signs List

- 1: liquefied gas carrier ship
- 2: double-shell tank
- 20: pipe tower
- 21: opening
- 3: inner shell
- 31: communication hole
- 32: communication pipe
- 33: projection
- 34: umbrella structure
- 35: closure plate
- 36: membrane
- 4: outer shell
- 7, 8: heat insulator
- 91: gas delivery pipe
- 92: branch pipe

## Claims

1. A double-shell tank (2) comprising:
a spherical inner shell (3) storing a liquefied gas;
an outer shell (4) enclosing the inner shell;
a pipe tower (20) extending from a top portion of the outer shell to a bottom of the inner shell; and
a communication pipe (32) joined to the inner shell around the pipe tower and defining a communication hole (31) allowing a space between the inner and outer shells to communicate with an interior of the inner shell, wherein
the space between the inner and outer shells is filled with a boil-off gas generated by evaporation of the liquefied gas, wherein
the communication pipe is configured to prevent leakage of the liquefied gas into the space between the inner and outer shells in the event that sloshing of the liquefied gas occurs.

2. The double-shell tank (2) according to claim 1, wherein
the communication pipe (32) is a straight pipe, and
at least one projection (33) that prevents the liquefied gas from leaking from the inner shell (3) into the space between the inner and outer (4) shells is disposed in the communication pipe.

3. The double-shell tank (2) according to claim 1, wherein
the communication pipe (32) is a straight pipe, and
an umbrella structure (34) that prevents the liquefied gas from flowing from the inner shell (3) into the communication hole (31) is disposed in the inner shell.

4. The double-shell tank (2) according to claim 1, wherein
the communication pipe (32) is a straight pipe,
the communication pipe includes through holes arranged in a matrix or zigzag pattern, and
one end of the communication pipe is closed by a closure plate (35), the one end being located in the inner shell (3).

5. The double-shell tank according (2) to claim 1, wherein the communication pipe (32) is an S-shaped pipe bent in an S-shape such that one end of the pipe opens upward and the other end of the pipe opens downward, the one end being located in the inner shell (3), the other end being located between the inner and outer (4) shells.

6. The double-shell tank (2) according to claim 1, wherein the communication pipe (32) is a V-shaped pipe bent in a V-shape such that one end of the pipe opens obliquely downward and the other end of the pipe opens obliquely upward, the one end being located in the inner shell (3), the other end being located between the inner and outer (4) shells.

7. The double-shell tank (2) according to claim 1, wherein
the communication pipe (32) is a straight pipe, and
a membrane (36) permeable to the boil-off gas and impermeable to the liquefied gas is attached to one end of the communication pipe, the one end being located in the inner shell (3).

8. The double-shell tank (2) according to any preceding claim, further comprising a heat insulator (7) packed in the space between the inner (3) and outer (4) shells and covering an outer surface of the inner shell and an inner surface of the outer shell.

9. The double-shell tank (2) according to any preceding claim, further comprising a heat insulator (8) covering an outer surface of the outer shell (4).

10. A liquefied gas carrier ship (1) comprising the double-shell tank (2) according to any preceding claim.

## Patentansprüche

1. Doppelwandiger Tank (2), umfassend:
eine kugelförmige innere Schale (3), die ein verflüssigtes Gas speichert;
eine äußere Schale (4), die die innere Schale umschließt;
einen Rohrturm (20), der sich von einem oberen Abschnitt der äußeren Schale bis zu einem Boden der inneren Schale erstreckt; und
ein Verbindungsrohr (32) an der inneren Schale um den Rohrturm herum angeschlossen ist und eine Verbindungsöffnung (31) definiert, um zu ermöglichen, dass ein Zwischenraum zwischen der inneren und der äußeren Schale mit einem Inneren der inneren Schale in Verbindung steht, wobei
der Zwischenraum zwischen der inneren und der äußeren Schale mit einem durch Verdampfung des verflüssigten Gases erzeugten Verdampfungsgas gefüllt ist, wobei
das Verbindungsrohr dazu ausgebildet ist, ein Austreten des verflüssigten Gases in den Zwischenraum zwischen der inneren und der äußeren Schale für den Fall zu verhindern, dass Schwappen des verflüssigten Gases auftritt.

2. Doppelwandiger Tank (2) nach Anspruch 1, wobei
das Verbindungsrohr (32) ein gerades Rohr ist, und
wenigstens ein Vorsprung (33) zum Verhindern, dass das verflüssigte Gas aus der inneren Schale (3) in den Zwischenraum zwischen der inneren Schale und der äußeren (4) Schale austritt, in dem Verbindungsrohr angeordnet ist.

3. Doppelwandiger Tank (2) nach Anspruch 1, wobei
das Verbindungsrohr (32) ein gerades Rohr ist, und
eine Schirmstruktur (34) zum Verhindern, dass das verflüssigte Gas aus der inneren Schale (3) in die Verbindungsöffnung (31) fließt, in der inneren Schale angeordnet ist.

4. Doppelwandiger Tank (2) nach Anspruch 1, wobei
das Verbindungsrohr (32) ein gerades Rohr ist,
das Verbindungsrohr Durchgangsöffnungen, die in einer Matrix- oder Zickzack-Anordnung angeordnet sind, einschließt, und
ein Ende des Verbindungsrohrs durch eine Verschlussplatte (35) verschlossen ist, wobei das eine Ende in der inneren Schale (3) angeordnet ist.

5. Doppelwandiger Tank nach (2) Anspruch 1, wobei das Verbindungsrohr (32) ein S-förmiges Rohr ist, das derart in einer S-Form gebogen ist, dass ein Ende des Rohrs nach oben öffnet und das andere Ende des Rohrs nach unten öffnet, wobei das eine Ende in der inneren Schale (3) angeordnet ist, wobei das andere Ende zwischen der inneren Schale und der äußeren (4) Schale angeordnet ist.

6. Doppelwandiger Tank (2) nach Anspruch 1, wobei das Verbindungsrohr (32) ein V-förmiges Rohr ist, das derart in einer V-Form gebogen ist, dass ein Ende des Rohrs schräg nach unten öffnet und das andere Ende des Rohrs schräg nach oben öffnet, wobei das eine Ende in der inneren Schale (3) angeordnet ist, wobei das andere Ende zwischen der inneren Schale und der äußeren (4) Schale angeordnet ist.

7. Doppelwandiger Tank (2) nach Anspruch 1, wobei
das Verbindungsrohr (32) ein gerades Rohr ist, und
eine Membran (36), die für das Verdampfungsgas durchlässig und für das verflüssigte Gas undurchlässig ist, an einem Ende des Verbindungsrohrs angebracht ist, wobei das eine Ende in der inneren Schale (3) angeordnet ist.

8. Doppelwandiger Tank (2) nach einem vorstehenden Anspruch, der weiter ein Wärmedämmmaterial (7) umfasst, das in dem Zwischenraum zwischen der inneren (3) und der äußeren (4) Schale gepackt ist und eine Außenfläche der inneren Schale und eine Innenfläche der äußeren Schale abdeckt.

9. Doppelwandiger Tank (2) nach einem vorstehenden Anspruch, der weiter ein Wärmedämmmaterial (8) umfasst, das eine Außenfläche der äußeren Schale (4) abdeckt.

10. Flüssiggas-Transportschiff (1), umfassend den doppelwandigen Tank (2) nach einem vorstehenden Anspruch.

## Revendications

1. Réservoir à double coque (2) comprenant :
une coque interne sphérique (3) stockant un gaz liquéfié ;
une coque externe (4) enfermant la coque interne ;
une tour de tuyauterie (20) s'étendant depuis une partie supérieure de la coque externe jusqu'à un fond de la coque interne ; et
un tuyau de communication (32) joint à la coque interne autour de la tour de tuyauterie et définissant un orifice de communication (31) permettant à un espace entre les coques interne et externe de communiquer avec un intérieur de la coque interne, dans lequel
l'espace entre les coques interne et externe est rempli d'un gaz d'évaporation généré par évaporation du gaz liquéfié, dans lequel
le tuyau de communication est configuré de manière à empêcher une fuite du gaz liquéfié dans l'espace entre les coques interne et externe dans le cas où un ballottement du gaz liquéfié se produit.

2. Réservoir à double coque (2) selon la revendication 1, dans lequel
le tuyau de communication (32) est un tuyau droit, et
au moins une saillie (33) qui empêche le gaz liquéfié de fuir depuis la coque interne (3) dans l'espace entre les coques interne et externe (4) est disposée dans le tuyau de communication.

3. Réservoir à double coque (2) selon la revendication 1, dans lequel
le tuyau de communication (32) est un tuyau droit, et
une structure en forme de parapluie (34) qui empêche le gaz liquéfié de s'écouler depuis la coque interne (3) dans l'orifice de communication (31) est disposée dans la coque interne.

4. Réservoir à double coque (2) selon la revendication 1, dans lequel
le tuyau de communication (32) est un tuyau droit,
le tuyau de communication inclut des trous traversants agencés selon un motif en matrice ou en zigzag, et
une extrémité du tuyau de communication est fermée par une plaque d'obturation (35), l'extrémité étant située dans la coque interne (3).

5. Réservoir à double coque selon (2) la revendication 1, dans lequel le tuyau de communication (32) est un tuyau en forme de S plié en forme de S de telle sorte qu'une extrémité du tuyau s'ouvre vers le haut et l'autre extrémité du tuyau s'ouvre vers le bas, l'une extrémité étant située dans la coque interne (3), l'autre extrémité étant située entre les coques interne et externe (4).

6. Réservoir à double coque (2) selon la revendication 1, dans lequel le tuyau de communication (32) est un tuyau en forme de V plié en forme de V de telle sorte qu'une extrémité du tuyau s'ouvre obliquement vers le bas et l'autre extrémité du tuyau s'ouvre obliquement vers le haut, l'une extrémité étant située dans la coque interne (3), l'autre extrémité étant située entre les coques interne et externe (4).

7. Réservoir à double coque (2) selon la revendication 1, dans lequel
le tuyau de communication (32) est un tuyau droit, et
une membrane (36) perméable au gaz d'évaporation et imperméable au gaz liquéfié est fixée à une extrémité du tuyau de communication, l'une extrémité étant située dans la coque interne (3).

8. Réservoir à double coque (2) selon une quelconque revendication précédente, comprenant en outre un isolant thermique (7) placé dans l'espace entre les coques interne (3) et externe (4) et recouvrant une surface externe de la coque interne et une surface interne de la coque externe.

9. Réservoir à double coque (2) selon une quelconque revendication précédente, comprenant en outre un isolant thermique (8) recouvrant une surface externe de la coque externe (4).

10. Navire transporteur de gaz liquéfié (1) comprenant le réservoir à double coque (2) selon une quelconque revendication précédente.
